# EUROPEAN PATENT APPLICATION

(11) **EP 2 428 120 A1**
(43) Date of publication of application: **14.03.2012**
(21) Application number: 10176163.3
(22) Date of filing: 10.09.2010
(51) Int. Cl.: A23G 1/54, A23G 3/00

(54) **Method for producing a filled chocolate product**

(71) Applicant: Kraft Foods R & D, Inc., Northfield, IL 60093-2753 (US)
(72) Inventor: Lochet, Claire, 80469, München (DE); Boissieu, Charlotte, 75013 Paris (FR); Notardonato, Lelia, 92160 Antony (FR)
(74) Representative: HOFFMANN EITLE

(57) **Abstract**

The present invention provides a method for producing a confectionery product comprising the steps of:
(i) forming a chocolate shell in a mould cavity;
(ii) depositing a cake component into the chocolate shell; and
(iii) forming a chocolate layer over the cake component so as to enclose the cake component.

A confectionery product obtainable from the above method is also provided.

## Description

### Technical field

The present invention relates to a method for producing a cake-containing confectionery product and a confectionery product obtainable by the method.

### Background of the Invention

Confectionery products comprising a solidified chocolate coating and a filling are widespread. The filling may contain one or more components selected from liquid components (e.g. an alcohol-containing liquid or a sugar syrup), semi-solid components (e.g. jelly or caramel) and solid components (e.g. biscuit, cake, fruit or nut). For instance, the commercially-available product Milka^{®} "Schoko & Keks" (manufactured by Kraft Foods) is a tablet-form confectionery product comprising a hard biscuit layer and a cream layer within a chocolate shell. The product is manufactured by forming the chocolate shell in a mould cavity, sequentially filling the shell with the cream and biscuit layers and forming a chocolate finishing layer on the biscuit layer.

The taste and texture (mouthfeel) of the Schoko & Keks product is dominated by the hard biscuit layer, which forms a large part of the product.

Another commercially-available filled confectionery product is the LU^{®} "Pim's" biscuit (manufactured by Kraft Foods). This product consists of a circular soft biscuit part, an orange jelly layer on the biscuit part and an upper chocolate layer which covers the jelly layer (but not the biscuit part). The jelly layer is fully enclosed by the biscuit part and the chocolate coating. The jelly layer has a water activity of about 0.77

A patent publication relating to a confectionery product of the LU^{®} Pim's type is EP-A-0 931 461. This publication discloses a method for manufacturing a confectionery product which involves forming a crystallized chocolate layer in a mould cavity, depositing a water-based filling (e.g. jelly) onto the crystallized chocolate layer and depositing a biscuit part onto the filling so as to seal the filling between the biscuit part and the chocolate layer. This method avoids wetting of the chocolate layer by migration of water from the filling, so that there is a contrast between the textures of the chocolate layer and the biscuit part. However, the product is limited in that the exposed biscuit part must have sufficient rigidity to withstand handling and must not degrade (e.g. due to absorption of water from the air) during its shelf-life.

There is constant consumer demand for confectionery products which provide novel tastes and mouthfeels. In particular, there is a demand for cake-containing confectionery products which provide different, yet complementary, mouthfeels. For example, a product having a soft centre and a contrasting hard coating which has a good 'snap' quality is particularly attractive from a sensorial perspective. In the case of a chocolate coating, the sensorial experience is particularly interesting as the 'snap' is followed by melting of the chocolate in the mouth. Such a changing, new and complementary sensorial experience is in high demand with consumers.

It is also desirable that the products can be efficiently produced on a large scale and easily handled whilst retaining the characteristics (e.g. soft texture) of traditional hand-made cakes. The products should also ideally have good shelf-lives (e.g. be free from microbial spoilage during storage under ambient conditions for at least three months).

An example of a confectionery product comprising a cake component and a chocolate coating is the Milka^{®} "Tender" product (manufactured by Kraft Foods). This product is manufactured by rolling a cream-covered sponge cake layer to produce a swirled roll. The roll is then cut into individual Swiss rolls and the rolls are covered with a thin chocolate coating by enrobing.

Whilst the Milka^{®} Tender product has a pleasant mouthfeel provided by the soft sponge cake and cream, the coating is thin (about 1 mm) and accounts for less than 30 mass% of the product. A thin coating is important for this product as it aims to provide a 'light' texture which would not be attained with a thick coating. In any case, it is not practical to perform multiple enrobing steps in order to build up the coating, and a coating consisting of multiple enrobed layers would not provide the 'snap' of a moulded coating.

The chocolate coating of the Tender product is therefore fragile, has a poor 'snap' quality, a very low heat-resistance and does not have much influence on the taste and texture of the product. The cake is by far the dominant component in terms of taste and texture. Furthermore, the product cannot be broken into pieces without destroying it.

The cream in the Milka^{®} Tender product tends to be unevenly distributed within the cake, and the chocolate coating is non-uniform and is liable to be delaminated from the cake. The product is also limited in that the chocolate coating is formed on the sponge cake rather than on the cream since the chocolate would otherwise mix with the cream. Moreover, the water activity of the cake has an upper limit of about 0.68 so that it is not damaged during the manufacturing process (especially the rolling step) or during subsequent packaging of the product.

Other disadvantages of the Milka^{®} Tender product include a lack of design features (e.g. indented or embossed lettering) on the chocolate coating following enrobing (such features would have to be added in a separate step), and packaging and stacking difficulties due to the irregular shape of the product.

An object of the present invention is to provide a method for producing a cake-containing confectionery product which does not suffer from the disadvantages of known methods. It is also an object of the invention to provide a cake-containing confectionery product which does not suffer from the disadvantages of known confectionery products.

### Summary of the Invention

A first embodiment of the present invention is a method for producing a confectionery product comprising the steps of:
(i) forming a chocolate shell in a mould cavity;
(ii) depositing a cake component into the chocolate shell; and
(iii) forming a chocolate layer over the cake component so as to enclose the cake component.

This method produces a confectionery product containing a cake component which is enclosed within a chocolate shell and a chocolate finishing layer ("bottom layer"), thereby protecting the cake component against the external environment and against handling procedures. This allows a variety of cake components to be used, even fragile cake components (e.g. a sponge cake component), so as to achieve the desired mouthfeel.

The method is also advantageous in that the thickness of the chocolate shell and bottom layer can be easily and independently varied (e.g. to produce a shell having a greater thickness than the coating of the Milka^{®} Tender product). This enables the shell and bottom layer to provide a good 'snap' and a contrasting mouthfeel to the cake component. Moreover, the shell and bottom layer can be made to have a high degree of uniformity.

The chocolate shell can readily be provided with design features by, for instance, using a mould cavity having the design engraved therein or embossed thereon. The size and shape of the product can also be easily modified according to demand by choosing an appropriate mould.

By pre-forming the chocolate shell in step (i), migration of water from the cake component or other (optional) components into the shell can be reduced relative to the case where a chocolate coating is formed on a cake component by enrobing.

A conventional moulding line can be employed to perform the above method. Confectionery products can therefore be produced on a large scale whilst closely controlling the structure and composition of the products.

Another embodiment of the present invention is a confectionery product obtainable by the above method. This product is advantageous for the reasons mentioned above, i.e. protection of the cake component, good contrast between the mouthfeels of the shell/bottom layer and the cake component, and a highly uniform shell and bottom layer.

### Brief Description of the Drawings

Figure 1: A tablet-form confectionery product according to a preferred embodiment of the present invention.
Figure 2: A tablet-form confectionery product according to an alternative preferred embodiment of the present invention.
Figure 3: A flow diagram illustrating a preferred method according to the present invention.

### Detailed Description of the Invention

The method of the first embodiment of the invention is described in detail below.

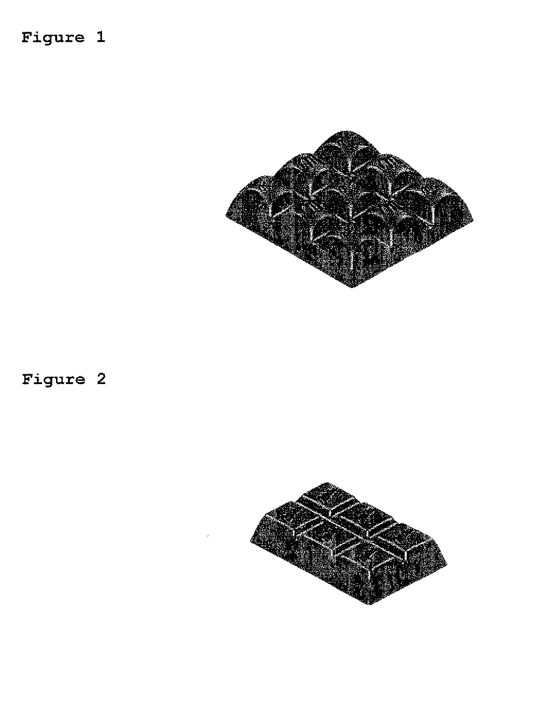

The confectionery product may take one of a variety of forms. These include a tablet, a bar and a praline. It is, however, preferred that the product is in the form of a tablet for ease of manufacture, packaging and stacking. In the context of the present invention, a tablet is a confectionery product containing a plurality of segments which are intended to be broken apart. Examples are illustrated in Figures 1 and 2.

### Step (i)

In step (i) of the method, a chocolate shell is formed in a mould cavity. This can be achieved in a conventional manner. For instance, the shell may be produced by depositing liquid chocolate into a mould cavity, vibrating the mould to remove air bubbles in the chocolate and inverting the mould to remove excess chocolate (the "inversion method"). It is, however, preferred that the shell is produced by depositing liquid chocolate into a mould cavity and immersing a chilled stamp into the liquid chocolate for a certain period of time in order to shape and solidify the chocolate against the wall of the cavity. This "cold-stamping" method rapidly produces a shell having a uniform thickness and does not produce as much excess chocolate as the inversion method. Cold-stamping is also not as dependent on the viscosity of the shell material as the inversion method.

It is possible for the chocolate shell to comprise more than one layer, in which case the layers may have different compositions. Such a shell can be produced, for example, by successive cold-stamping steps.

The chocolate shell preferably has a minimum thickness of 1 mm and a maximum thickness of 4 mm in order to provide a good 'snap' and good cooling characteristics. The thickness of the shell depends on the desired product properties as well as the size of the product. That is to say, smaller (e.g. bite-size) products may have a relatively thin shell, whereas larger products require thicker shells for structural rigidity.

Another way of characterising the chocolate shell is to consider the amount of the shell in the final product. The product preferably contains 20-60 mass% of the shell based on the mass of the product so that the contribution of the shell to the taste and mouthfeel of the product is optimal. More preferably the shell constitutes 30-50 mass%, most preferably 35-45 mass%, of the product.

The chocolate shell is preferably at least partially solidified prior to depositing the cake component or other (optional) components thereon so that the shell retains its shape. In the case that the cake component is deposited directly onto the shell, it is preferable that the shell is not completely solidified at the time of depositing the cake component (at least the inner part of the shell is not solidified) so that the cake component bonds to the shell and the volume of the product can be well controlled. On the other hand, it is preferable that the chocolate shell is substantially solidified, more preferably completely solidified, prior to depositing a component other than the cake component on the shell if the component has a high water activity compared to the shell. This prevents migration of water into the shell.

The mould cavity may be the only cavity in the mould or may be one of a plurality of cavities. For instance, the mould may be a tray mould consisting of one or more lanes of cavities, the cavities also being arranged into rows. The size and shape of the cavity depends on the type of shell to be produced. It is though preferred that the cavity has a substantially uniform inner surface which corresponds to the shape of a stamp in order to produce a shell having a uniform thickness by cold-stamping.

The mould cavity may contain sub-cavities in order to produce a tablet-form confection.

"Chocolate" in the context of the present invention includes dark, milk, white, compound chocolate and any other confectionery mass which is solid at room temperature (25°C) and contains fat (e.g. cocoa butter or cocoa butter substitute) and one or more components derived from cocoa beans (e.g. cocoa powder). A sweetener (e.g. sucrose) is typically also contained in the chocolate. Other optional components include milk components (e.g. milk fat and milk powder) and inclusions such as chopped nuts, puffed rice, dried fruit and caramel pieces.

### Step (ii)

In step (ii) of the method, a cake component is deposited into the chocolate shell.

"Cake" in the context of the present invention means a soft baked confection which is produced from flour, a sweetener (e.g. sugar) and one or both of egg (whole egg or egg white) and a fat source, has a water content of at least 10 mass%, and has a water activity of at least 0.60. The cake component is therefore distinguished from a biscuit, which is hard and brittle and has a water content of less than 5 mass% and a water activity of about 0.40 or less.

A suitable 'dough' for producing the cake component contains 5-65 mass% flour, 5-60 mass% sugar (e.g. sucrose), 0-30 mass% egg and 0-35 mass% of a fat source. Examples of the fat source include sunflower oil, margarine and butter.

It is preferred that the cake dough contains egg, otherwise it is necessary to include an 'egg-replacer' (e.g. one or more of milk protein , an emulsifier and wheat starch) or a leavening agent (e.g. baking powder) in order to aerate the cake and provide a good level of elasticity. The dough more preferably contains at least 20 mass% of egg.

The cake component may contain other components such as chocolate, cocoa powder, vanilla or ground nuts.

The cake component is preferably a sponge cake component. This means that the dough has been subject to aeration which results in a cake component containing trapped air (e.g. in an egg protein matrix) which provides a soft texture and lowers the calorie content (per unit volume) of the confectionery product. In this regard, the sponge cake component preferably has a dough density before baking of less than 0.80 g/cm³.

It is also preferable that the cake component has an elevated water content relative to traditional cake components. In particular, the water content of the cake component is preferably 15-25 mass%, more preferably 17-22 mass% based on the mass of the cake component. This provides the optimum mouthfeel. On the other hand, the cake component preferably has a water activity of no more than 0.80, more preferably 0.65-0.75, so that it does not spoil easily due to the growth of micro-organisms (e.g. mould, yeast or bacteria) therein and there is not excessive migration of water to the shell. Measures for reducing the water activity of the cake component whilst maintaining its water content include adding glycerol thereto.

The cake component can take a variety of forms. For instance, the cake component may be in the form of a single slab or a plurality of cake pieces (e.g. cubes or crumbs). It is though preferred that the cake component is a single slab which extends through the confectionery product so as to provide a uniform taste and mouthfeel and allow the cake component to be easily deposited into the chocolate shell. The slab has a preferable thickness of 5-10 mm in order to have the optimum influence on the taste and mouthfeel of the product. A slab having a thickness of less than 5 mm is also liable to be damaged during the manufacture of the product and during packaging.

The cake component is produced by baking (i.e. heating) a dough in order to transform starch in the dough. This is typically performed in an oven under atmospheric pressure and at an air temperature of 120-270°C. The temperature of the centre of the dough/cake during baking will usually not exceed about 105°C. The period of baking depends on the size and geometry of the cake, but is usually at least five minutes.

Optionally the cake component may be treated with a so-called 'soaking liquid' after baking in order to improve its texture and microbial stability. Examples of the soaking liquid include liquids containing one or more of water, sorbitol, glucose syrup, ethanol and a preservative (e.g. potassium sorbate). When used, the soaking liquid is preferably applied in an amount of 8-25 mass% based on the mass of the untreated cake component. The soaking liquid may alter the water activity of the cake component cake; for example, the soaking liquid may have a water activity of about 0.90.

The desired size and shape of the cake component can be produced during baking using a mould. Alternatively, a baked cake (e.g. a continuous cake sheet) can be cut in order to produce the cake component. A preferable method in this regard employs a highly pressurized stream of water to cut the cake. This method is rapid yet precise. The method also does not damage the cake.

The cake component can be deposited by hand in order to prevent fracturing of the cake structure. Alternatively, the cake component may be deposited using a robot fitted with a suction head in order to increase the speed of production.

### Step (iii)

In step (iii) of the method, a chocolate finishing layer (bottom layer) is formed over the cake component so as to enclose the cake component within the shell and bottom layer. This means that the cake component in the finished confectionery product is not visible.

The chocolate layer can be deposited using a conventional method such as by depositing liquid chocolate via one or more nozzles (one-dimensional or x-y nozzles). The mould might then be vibrated to remove air from the chocolate and provide a uniform chocolate layer. Alternatively, liquid chocolate may be sprayed over the entire mould and excess chocolate removed from between the mould cavities using a 'licking' roller. This enables a thin layer to be formed and is suitable if the chocolate is deposited onto a filling (e.g. cream) having a low viscosity. The spraying method can also be used in conjunction with a method which deposits a larger volume of chocolate via one or more nozzles.

Since the deposited chocolate is liable to compress the cake component, it is preferred that the chocolate layer is deposited in a predetermined volume rather than in excess. This allows the weight of the confectionery product to be precisely managed and avoids the need to scrape away excess chocolate. Such scraping may damage the cake component and so is preferably avoided.

### Further steps

In a preferred embodiment, the method comprises the further step of depositing a filling ("first filling") into the chocolate shell prior to step (ii) and depositing the cake component directly onto the filling. This enhances the taste and texture of the product, allows the desired position of the cake component in the product to be retained and prevents the cake component drying out. These effects are enhanced if the cake component is pressed into the filling to some extent since then the filling flows around the cake component and adheres more strongly to the cake component. Pressing the cake component into the filling also reduces the volume of the confectionery product. This is especially so if the cake component is a single slab which extends through the product.

In another preferred embodiment, the cake component and the first filling are deposited in admixture into the chocolate shell. This is particularly suited to the deposition of a plurality of cake pieces (including cake crumbs) since it allows the cake pieces to be evenly distributed throughout the product and prevents the cake drying out.

Examples of the first filling include chocolate, caramel and jelly. It is though preferred that the filling is a cream filling, particularly an aerated cream filling, from the viewpoint of providing a complementary taste and mouthfeel to the cake component. Examples of the cream filling include a chocolate and cream mixture (e.g. a ganache).

By way of example, the cream filling contains a 'white base' and optionally a flavouring agent and/or a preservative. The white base contains about 15% to about 25% of a sweetener solution (e.g. containing 70% solids), about 15% to about 25% of a fat source and one or more of a milk component (e.g. liquid milk, liquid cream, condensed milk or milk powder) and a flavouring agent. Examples of the flavouring agent include chocolate, marzipan, a fat-based hazelnut filling and jam. The flavouring agent can be added in an amount of up to about 30 mass% based on the total mass of the filling. Examples of the preservative include ethanol (e.g. 2 mass% ethanol based on the mass of the filling) and sodium sorbate.

The filling may include solid components (e.g. nut or fruit pieces). Also, the filling may be an emulsion (a w/o or o/w emulsion) and the filling may be aerated.

It is desirable that the first filling has a similar water activity to the cake component so that the filling and the cake component are roughly in equilibrium (i.e. there is minimal migration of water between the two components). In particular, it is preferred that the first filling has a water activity of 0.60-0.80, more preferably 0.65-0.75. Even more preferably, both the cake component and the first filling have a water activity of 0.65-0.75. It is most preferred that the water activities of the cake component and the first filling do not differ by more than 0.05.

For optimum mouthfeel, the water content of the first filling is preferably 10-20 mass%, more preferably 15-17 mass%.

Another preferred step is the deposition of a filling ("second filling") onto the cake component in the mould cavity prior to step (iii). This further improves the moisture-retention of the cake component and makes it easier to deposit the bottom layer by providing an even surface. It is desirable that the second filling has a composition, water content and water activity as described above for the first filling

The fillings can be deposited using a conventional depositor fitted with a nozzle.

Other optional method steps include the formation of a moisture barrier layer on the chocolate shell prior to the deposition of the cake component (and the optional first filling) in order to prevent migration of water to the chocolate shell from components within the shell. Suitable moisture barrier layers include fat-based moisture barrier layers and heterogeneous moisture barrier layers, both of which contain crystalline fats.

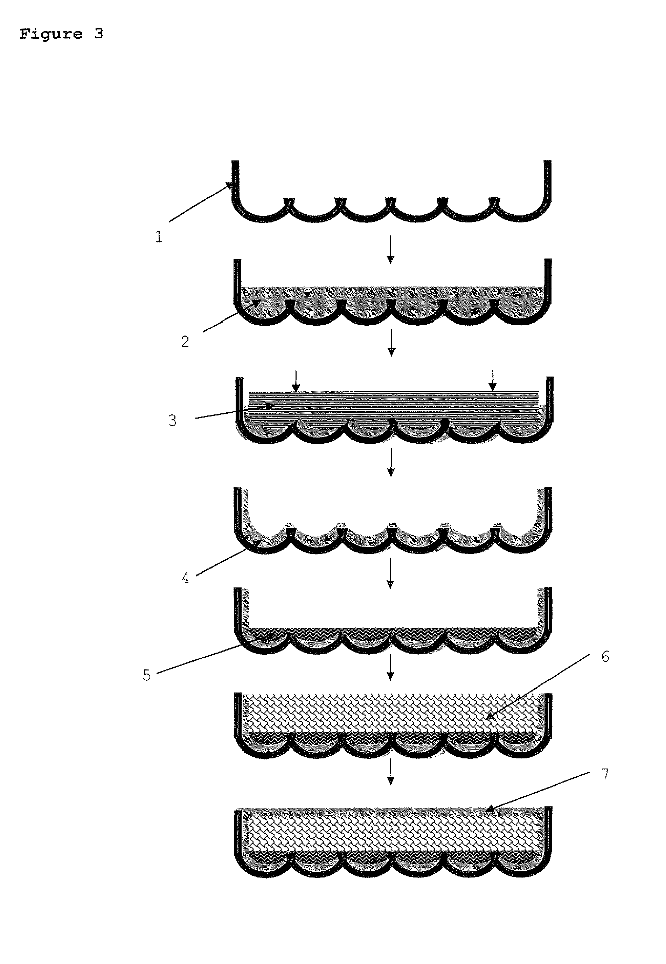

A particularly preferred method is illustrated in Figure 3. This method comprises the initial step of depositing liquid chocolate (2) into a mould cavity (1). The chocolate is shaped and solidified by pressing a cold stamp (3) into the chocolate to form a shell (4). A filling (5) (e.g. a cream filling) is then deposited into the shell, followed by a cake component (6). The cake component is a single slab which is pressed into the filling slightly. In the final step, a chocolate layer (7) is formed on the cake component so that the cake component is enclosed within the shell (4) and the chocolate layer (7) .

### The confectionery product

The confectionery product produced by the above method comprises, as essential features, a moulded chocolate shell, a chocolate bottom layer and a cake component which is enclosed within the shell and the bottom layer. The preferred form of the confectionery product and the preferred form, composition and properties of the cake component are as described above regarding the method for producing the product.

The confectionery product preferably comprises a filling (first filling) between the shell and the cake component. As mentioned above, the cake component is preferably pressed into the filling or is in admixture with the filling. Examples of the filling include chocolate, caramel and jelly, but it is preferred that the filling is a cream filling, as described above. The preferred composition and properties of the filling are also as described above.

It is also preferable that the confectionery product comprises a filling (second filling) between the cake component and the bottom layer. Desirable features of the second filling are as elaborated above regarding the method for producing the product.

The confectionery product preferably comprises 30-80 mass%, more preferably 40-65 mass%, in total of the chocolate shell and the bottom layer and 10-50 mass% of the cake component, based on the mass of the product, in order to achieve the optimum combination of tastes and textures (i.e. avoid over-dominance of the taste and/or texture of the product by the chocolate components or the cake component). Furthermore, when the product contains a first and/or a second filling, the total amount of the filling(s) is preferably 10-40 mass% based on the mass of the product. This ensures that the taste and texture of the filling are well-perceived but do not over-dominate the taste and texture of the product.

### Examples

The present invention is illustrated by the following Examples.

Unless stated otherwise, all amounts are percentages by mass (mass%) based on the total mass of the confectionery product.

### Example 1

Tempered liquid Milka^{®} milk chocolate (manufactured by Kraft Foods) at a temperature of 28°C was manually deposited into the cavity of a tablet-form mould using a piping bag. The mould measured 72 × 65 × 19 mm and contained nine sub-cavities in order to form 'break lines' on the product. The shape of the product formed by the mould is depicted in Figure 1.

Following deposition of the chocolate, the mould was inverted and shaken to release excess chocolate. The chocolate remaining in the shell was then left for 15 minutes at ambient temperature to partially solidify thereby forming a chocolate shell having a mass of 21 g.

A filling having a water activity of 0.70 and consisting of a mixture of a praline filling (56%), a white cream filling (42%) and crispy vanilla-flavoured pieces (2%) was manually deposited on top of the chocolate shell using a piping bag to produce an even filling layer. Subsequently, a single slab of sponge cake comprising 10% of a soaking agent and having a thickness of 7 mm was manually slightly pressed onto the filling.

Further tempered liquid Milka^{®} milk chocolate was manually deposited at a temperature of 28°C onto the cake using a piping bag in order to form a bottom layer enclosing the cake. The mould was vibrated, and the excess chocolate was removed with a scraper. The mould was then placed in a refrigerator at 8°C for 50 minutes. Finally, the mould was upturned to release the confectionery product.

The tablet-form confection contained 61.3% in total of the milk chocolate shell and the bottom layer, 20.9% of the cake component and 17.8% of the filling.

The compositions of the filling components, the cake dough and the soaking agent are as follows:
Praline filling:
   36% sugar
   32.5% vegetable fat
   11% cocoa mass
   13.5% milk powder
   4% cocoa butter
   1% sweet whey powder
   1% milk fat
   0.5% emulsifier
   0.5 hazelnut paste
White cream filling:
   38% cocoa butter substitute
   37.9% condensed milk
   19% glucose-fructose syrup
   0.7% vanilla flavouring
   4.4% emulsifier
Cake dough:
   7% flour
   22% ground hazelnut
   32% sugar
   39% egg white
Soaking agent:
   62% sorbitol solution (70% solids)
   16% glucose syrup (80% solids)
   14% water
   8% ethanol (96.3°)

### Examples 2-9

Tablet-form confections were produced in the same manner as in Example 1, except that the identities and amounts of the components were varied, as shown in Table 1 below.

### Example 10

A tablet-form confection was produced in the same manner as in Example 1, except that the single slab of chocolate sponge cake was divided into cubes having a side length of approximately 3.5 mm. The identities and amounts of the components were also varied, as shown in Table 1 below.

### Example 11

A tablet-form confection was produced in the same manner as in Example 1, except that the single slab of chocolate sponge cake was crumbled and deposited in admixture with the filling. The identities and amounts of the components were also varied, as shown in Table 1 below.

### Example 12

A tablet-form confection was produced in the same manner as in Example 1, except that the cake component was deposited directly onto the shell and pressed down slightly after the excess chocolate had been removed by inversion, and the bottom layer was formed by depositing the chocolate onto the cake without over-filling and vibrating the mould slightly. No scraping was applied to the chocolate bottom layer.

The identities and amounts of the components were also varied, as shown in Table 1 below.

The products of Examples 1-12 were found to have pleasant and unique tastes and textures. In particular, the tastes and textures of the shells and bottom layers were well balanced with those of the cake components, and the products provided a good `snap` yet were easily broken into segments. Also, the products were not damaged by handling procedures (e.g. de-moulding).

**Table 1**

| **Example** | **Total mass of product (g)** | **Total amount of shell & bottom layer (mass%)** | **Cake component** | | **Filling** | |
|---|---|---|---|---|---|---|
| | | | **Amount (mass%)** | **Water activity** | **Amount (mass%)** | **Water activity** |
| 1 | 34 | 61.3 | 20.9 | 0.67 | 17.8 | 0.70 |
| 2 | 180 | 39.7 | 26.1 | 0.69 | 34.2 | n/a |
| 3 | 177 | 66.1 | 10.2 | 0.69 | 23.7 | n/a |
| 4 | 27 | 55.0 | 25.0 | 0.78 | 20.0 | 0.63 |
| 5 | 24 | 58.0 | 12.0 | 0.67 | 30.0 | 0.68 |
| 6 | 27 | 70.0 | 11.0 | 0.78 | 19.0 | 0.71 |
| 7 | 60 | 66.7 | 20.0 | 0.74 | 13.3 | 0.72 |
| 8 | 60 | 66.7 | 20.0 | 0.74 | 13.3 | 0.65 |
| 9 | 138 | 75.0 | 15.5 | 0.66 | 9.5 | 0.75 |
| 10 | 110 | 64.0 | 25.0 | 0.71 | 11.0 | n/a |
| 11 | 100 | 60.0 | 28.0 | 0.71 | 12.0 | n/a |
| 12 | 60 | 62.0 | 38.0 | 0.72 | - | - |

## Claims

1. A method for producing a confectionery product comprising the steps of:
(i) forming a chocolate shell in a mould cavity;
(ii) depositing a cake component into the chocolate shell; and
(iii) forming a chocolate layer over the cake component so as to enclose the cake component.

2. A method according to Claim 1, wherein the confectionery product is in the form of a tablet.

3. A method according to any preceding claim, wherein the cake component has a water activity of 0.65-0.75.

4. A method according to any preceding claim, wherein the cake component is in the form of a single slab.

5. A method according to any preceding claim, further comprising the step of depositing a filling into the chocolate shell prior to step (ii) and depositing the cake component directly onto the filling.

6. A method according to Claim 5, wherein the cake component is pressed into the filling prior to step (iii).

7. A method according to any of Claims 1-3, wherein the cake component comprises a plurality of cake pieces which are deposited in step (ii) in admixture with a filling.

8. A method according to any of Claims 5-7, wherein the filling is a cream filling.

9. A method according to any of Claims 5-8, wherein the filling has a water activity of 0.65-0.75.

10. A method according to any preceding claim, further comprising the step of depositing a filling onto the cake component prior to step (iii).

11. A method according to Claim 10, wherein the filling is a cream filling.

12. A method according to Claim 10 or Claim 11, wherein the filling has a water activity of 0.65-0.75.

13. A confectionery product obtainable by a method according to any preceding claim.

14. A confectionery product according to Claim 13, which comprises 30-80 mass% in total of a chocolate shell and a chocolate layer which enclose a cake component and 10-50 mass% of the cake component, based on the mass of the product.

15. A confectionery product according to Claim 14, which further comprises 10-40 mass% of a filling based on the mass of the product, the filling being located between the chocolate shell and the cake component and/or between the cake component and the chocolate layer.
